# EUROPÄISCHE PATENTSCHRIFT

(11) **EP 2 374 569 B1**
(45) Veröffentlichungstag und Bekanntmachung des Hinweises auf die Patenterteilung: **07.11.2018**
(21) Anmeldenummer: 11158090.8
(22) Anmeldetag: 14.03.2011
(51) Int. Cl.: B23K 26/08, B23K 26/06, B23K 26/36

(54) **Laserbearbeitungsvorrichtung und Verfahren zur Herstellung eines rotationssymmetrischen Werkzeugs**
Laser processing device and method for manufacturing a rotation symmetric tool
Dispositif de traitement au laser et procédé de fabrication d'un outil à rotation symétrique

(30) Priorität: 15.03.2010 DE 102010011508
(43) Veröffentlichungstag der Anmeldung: 12.10.2011
(73) Patentinhaber: Ewag AG, 4554 Etziken (CH)
(72) Erfinder: Plüss, Christoph, 3400 Burgdorf (CH)
(74) Vertreter: Rüger Abel

(56) Entgegenhaltungen:
- EP-A2- 2 314 412
- WO-A1-2005/044505
- DE-A1-102006 005 401

## Beschreibung

Die Erfindung betrifft eine Laserbearbeitungsvorrichtung sowie ein Verfahren zur Herstellung eines Werkzeugs, insbesondere eines rotationssymmetrischen Werkzeugs aus einem Rohling. Am Rohling sollen eine oder mehrere Spannuten, Schneidkanten, Spanflächen und Freiflächen gebildet werden. Der Rohling kann auch aus mehrere Materialschichten oder aus mehreren aneinander gefügten Elementen, beispielsweise einem Hartmetallschaft und einem Diamantwerkzeugeinsatz aufgebaut sein.

Zur Bearbeitung solcher Rohlinge sind verschiedene Abtragungsverfahren bekannt, z.B. Schleifen. Das Schleifen von sehr harten Werkstoffen, wie etwa polykristalliner Diamant (PKD) oder CVD-Diamant (Chemical Vapor Deposition) stößt allerdings sowohl technisch als auch wirtschaftlich gesehen an seine Grenzen. Gerade bei sehr kleinen Dimensionen können durch Schleifen nur bestimmte Spannutgeometrien hergestellt werden. Außerdem sind die Krafteinwirkungen auf den Rohling sehr groß und können zu unerwünschten Deformationen führen. Die Laserablation mit Hilfe von kurzgepulsten Lasern bietet neue Möglichkeiten diese Werkstoffe wirtschaftlich zu bearbeiten, um beispielsweise Werkzeuge herzustellen.

Die Erzeugung qualitativ hochwertiger Werkzeuge wirft allerdings Probleme auf. Nach dem heutigen Stand der Technik sind Lasersysteme bekannt, welche die Werkstückkontur mit Hilfe eines Laserscanners abfahren, wobei der Rohling gegenüber dem Scanner stationär angeordnet ist. Zwar erlauben die Laserscanner sehr hohe Bahngeschwindigkeiten, mit denen die einzelnen Laserstrahlimpulse auf dem Rohling entlang bewegt werden können. Jedoch entspricht die dabei erreichbare Genauigkeit nicht den heutigen Anforderungen. Zudem weichen die hergestellten Flächen und Kanten vom geradlinigen Verlauf ab und weisen einen unebenen gezackten Verlauf auf.

Weiter sind auch Laserbearbeitungsmaschinen bekannt, bei denen der Laser über Maschinenachsen relativ zum Rohling bewegt wird. Zwar kann hierbei eine höhere Genauigkeit und eine höhere Qualität der am Rohling erzeugten Flächen und Kanten erreicht werden, aber die erreichbaren Abtragsraten sind gering. Dies ist darauf zurückzuführen, dass die Dynamik und die Geschwindigkeit der Maschinenachsen begrenzt ist. Zur Erhöhung der Dynamik der Maschinenachsen muss ein sehr großer Aufwand betrieben werden, was die Laserbearbeitungsmaschine sehr teuer macht.

Ein Verfahren und eine Vorrichtung zur Laserbearbeitung eines Rohlings sind beispielsweise aus der DE 299 08 585 U1 bekannt. Die Vorrichtung verfügt über einen Laser zur Erzeugung von Laserstrahlimpulsen. Über eine Antriebseinheit wird der Laser und/oder die Werkstückhalterung in Richtung und quer zur optischen Achse des Lasers bewegt. Der Laserstrahl wird dabei zum Abtragen von einzelnen Werkstoffschichten in mehreren nebeneinander verlaufenden oder überlappenden Linien über die gesamte Breite der abzutragenden Fläche bewegt. Das Material wird daher punktförmig an den Auftreffstellen des Laserstrahlimpulses abgetragen. Um einen kontinuierlichen Materialabtrag zu erhalten überlappen sich die Auftreffstellen zwischen 5 und 25 Prozent. Bei gepulsten Lasern mit sehr hohen Frequenzen sind hierfür entsprechend große Vorschubgeschwindigkeiten notwendig. Wie bereits geschildert ist die Abtragsrate bei dieser Vorgehensweise gering und die Bearbeitungszeiten entsprechend lang.

In WO 2006/038017 A2 sind zwei verschiedene Ausführungsformen einer Laserbearbeitungsvorrichtung beschrieben. Bei der ersten Ausführungsform wird mit Hilfe eines Laserscanners eine Pulsfläche aus mehreren nebeneinander angeordneten Auftreffstellen der Laserstrahlimpulse gebildet. Der Materialabtrag erfolgt an den Auftreffstellen der Laserstrahlimpulse in der Pulsfläche. Bei einer zweiten Ausführungsform wird kein flächiger Materialabtrag bewirkt, sondern der Rohling wird durchtrennt. Zunächst wird der Rohling durchbohrt. Nach dem Durchbohren beginnt eine Vorschubbewegung zum Durchschneiden des Rohlings in einem Zug. Dies entspricht den beiden bereits eingangs geschilderten Varianten der Laserbearbeitung.

Aus DE 10 2007 012 815 A1 ist ein Verfahren bekannt, bei dem die Auftreffstellen der Laserstrahlimpulse mittels eines Scanners entlang eines Rasters platziert werden. Überlagert hierzu kann eine ein- oder zweidimensionale Relativbewegung zwischen dem Raster der Auftreffstellen und dem Rohling durchgeführt werden. Diese überlagerte Relativbewegung soll schneller sein als die Bahnbewegung der Laserstrahlimpulse durch den Scanner. Wie eine derart schnelle überlagerte Bewegung hervorgerufen werden könnte, ist nicht erläutert. Bekannte Maschinenachsen können dies jedenfalls nicht leisten.

EP 2 314 412 A2 fällt unter Artikel 54(3) EPÜ und beschreibt ein Verfahren und eine Laserbearbeitungsvorrichtung. Dort wird eine zweidimensionale Pulsfläche erzeugt, innerhalb der Laserstrahlimpulse entlang einer vorgegebenen Pulsbahn auf das zu bearbeitende Werkstück gerichtet werden. Die Pulsfläche und das Werkstück werden relativ zueinander bewegt.

Bei der aus WO 2005/044505 A1 bekannten Vorrichtung sind zwei Laserbearbeitungseinheitenvorhanden, die unterschiedliche Bearbeitungsparameter für unterschiedliche Aufgaben aufweist. Eine Laserbearbeitungseinheit dient beispielsweise zum Laserbohren, während die andere Laserbearbeitungseinheit zur Herstellung eines Gesenks vorgesehen ist.

Ein Verfahren zur Herstellung eines Schaftfräsers ist aus DE 10 2006 005 401 A1 bekannt. An einem mit einer Hartstoffschicht versehenen Rohling wird mittels eines bahngesteuerten Laserstrahls eine Schneidengeometrie mit Fräserschneiden und Spannuten erzeugt. Einzelheiten sind nicht beschrieben.

Ausgehend von diesen bekannten Verfahren und Vorrichtungen kann es als Aufgabe der vorliegenden Erfindung angesehen werden, ein verbessertes Verfahren und eine Laserbearbeitungsvorrichtung zur Herstellung von Werkzeugen bereit zu stellen.

Diese Aufgabe wird durch ein Verfahren mit den Merkmalen des Patentanspruches 1 sowie eine Vorrichtung mit den Merkmalen des Patentanspruches 11 gelöst.

Erfindungsgemäß ist es vorgesehen, einen gepulsten Laser zu verwenden, der mit einer vorgegebenen Impulsfrequenz Laserstrahlimpulse erzeugt. Über eine Ablenkeinrichtung werden die Laserstrahlimpulse insbesondere in einer fest vorgegebenen Reihenfolge auf eine Vielzahl von Auftreffstellen auf der Oberfläche des Rohlings gerichtet. Diese vorgegebenen Auftreffstellen bilden eine zweidimensionale Pulsfläche auf der Oberfläche des Rohlings. Es wird damit eine Sequenz von Laserstrahlimpulsen erzeugt, die auf voneinander verschiedene vorgegebene Auftreffstellen in der Pulsfläche gerichtet sind. Diese Sequenz wird in einer vorgegebenen Reihenfolge immer wieder wiederholt.

Eine Positioniereinrichtung bewegt den Rohling und/oder die Ablenkeinrichtung gegebenenfalls zusammen mit dem Laser in eine Relativbewegungsrichtung entlang der zu erzeugenden Kante oder Fläche. Dabei bewegt sich die Pulsfläche mit der durch die Positionseinrichtung für die Relativbewegung vorgegebenen Geschwindigkeit auf der Oberfläche des Rohlings entlang. Auf diese Weise erfolgt ein Materialabtrag im Bereich der Pulsfläche, die wie ein Werkzeug relativ zum Rohling bewegt wird. Dadurch wird zum einen eine hohe Abtragsrate erreicht und zum anderen können auf diese Weise sehr exakte Kanten- oder Flächenverläufe mit geringen Abweichungen oder Ungenauigkeiten von der gewünschten Verlaufslinie hergestellt werden. Im Rohling wird zumindest eine Spannut und zumindest eine Schneidkante erzeugt, wobei zuerst die Spannut erzeugt wird. Dadurch kann auf zusätzliche formgebende und insbesondere materialabtragende Verfahren verzichtet werden. Das Werkzeug kann ausschließlich durch Laserablation aus dem Rohling hergestellt werden. Es können insbesondere kleine Rotationswerkzeuge mit einem Durchmesser von kleiner als 2 Millimetern oder sogar kleiner als 0,5 Millimetern hergestellt werden.

Die Erfindung kombiniert die beiden bisher alternativ verwendeten Laserbearbeitungsverfahren. Die schnelle Scanneroptik wird verwendet, um die Pulsfläche zu bilden. Die Scanneroptik positioniert die Laserstrahlimpulse dabei nicht entlang der gewünschten Kontur der herzustellenden Fläche oder Kante, sondern richtet die Laserstrahlimpulse auf die Auftreffstellen der Pulsfläche. Die gleichzeitige Relativbewegung der Pulsfläche gegenüber dem Rohling über Maschinenachsen gewährleistet die gewünschte Genauigkeit, um Flächen- und Kantenverläufe mit geringen Abweichungen vom vorgegebenen Verlauf zu erhalten.

Während dem Abtragen des Materials zur Erzeugung der Spannut erfolgt am schaftseitigen Ende der Spannut eine Richtungsumkehr der Relativbewegung zwischen Pulsfläche und Rohling. Die Laserstrahlimpulse werden während der Richtungsumkehr abgeschaltet oder die Anzahl und/oder Position der Auftreffstellen von Laserstrahlimpulsen in der Pulsfläche wird verändert, um die gewünschte Nutform am Nutende zu erhalten.

Im Unterschied dazu, ist die Relativbewegung zwischen Pulsfläche und Rohling beim Herstellen der Schneidkante ohne Stillstand der Pulsfläche auf der Oberfläche des Rohlings und könnte auch als fortgesetzte Relativbewegung bezeichnet werden. Ergeben sich beispielsweise im Rahmen einer Richtungsumkehr der Relativbewegung kurze Stillstandsphasen, so befindet sich die Pulsfläche während dieser Stillstandsphasen außerhalb des Rohlings. Sobald auch nur ein Abschnitt der Pulsfläche auf die Oberfläche des Rohlings trifft, wird die Relativbewegung stillstandslos ausgeführt.

Erfindungsgemäß wird die Spannut oder alle Spannuten zuerst erzeugt. Dadurch kann der für das anschließende Erstellen der wenigstens einen Schneidkante notwendige Materialabtrag verringert werden. Dadurch ist ein Schneidkantenverlauf mit einer sehr geringen Unebenheit bzw. Rauhigkeit erreichbar. Nach dem Erzeugen der Spannut und vor dem Erzeugen der Schneidkante kann eine Freistellungsvertiefung erzeugt werden, die sich an die beim Erzeugen der Schneidkante entstehende Freifläche anschließt. Die Freistellungsvertiefung erleichtert das Erzeugen von großen Freiwinkeln im Bereich von etwa 15° bis 30°.

Erfindungsgemäß ist die Intensität der Laserstrahlimpulse für das Erzeugen der Schneidkante geringer als für das Erzeugen der Spannut.

Bei einem bevorzugten Ausführungsbeispiel sind die Laserstrahlimpulse strahlhomogenisiert. Die Energieverteilung im Laserstrahlimpuls ist daher sehr gleichmäßig über die gesamte Querschnittsfläche des Laserstrahlimpulses und damit über die gesamte Auftreffstelle. Die Erwärmung des Rohlings bei der Werkzeugherstellung kann dadurch weiter reduziert und thermische Beeinträchtigungen und insbesondere Verformungen vermieden werden. Dies ist insbesondere bei der Herstellung von sehr filigranen Werkzeugen von Bedeutung, beispielsweise bei Mikrowerkzeugen.

Die Positioniereinrichtung kann eine Drehachse aufweisen, die mit der Längsachse eines zu bearbeitenden zylindrischen Rohlings übereinstimmt. Der Rohling wird während der Erzeugung einer Spannut und/oder zwischen dem Erzeugen zweier Spannuten um diese Drehachse gedreht. Auf diese Weise lassen sich auch Spannuten herstellen, die zumindest abschnittsweise quer zur Längsachse des Rohlings verlaufen, z.B. spiralförmige Spannuten.

Vorzugsweise werden gepulste Laser mit einer Frequenz zwischen 1 und 10 MHz verwendet.

Vorzugsweise stellt die Positioniereinrichtung zumindest zeitweise und zumindest während der Herstellung der Spanfläche oder der Freifläche einen Neigungswinkel mit einem Betrag größer als Null zwischen der Abstrahlrichtung der Laserstrahlimpulse und einer am Rohling zu erzeugenden Fläche ein. Die Laserstrahlimpulse verlaufen dabei bevorzugt rechtwinkelig zur Relativbewegungsrichtung. Die Pulsfläche ist quer zu der zu erzeugenden Fläche ausgerichtet. Durch die um den Neigungswinkel schräg zur erzeugenden Fläche ausgerichteten Laserstrahlimpulse wird beim Materialabtrag ein zusätzlicher Freiraum geschaffen, der das Entfernen des entstehenden Plasmas im Abtragungsbereich verbessert. Zu Beginn des Verfahrens kann der Neigungswinkel gleich Null sein und nach dem Erreichen eines vorgegebenen Verfahrenszustandes während der Herstellung vergrößert werden.

Der einzustellende Neigungswinkel kann beispielsweise vom zu bearbeitenden Material des Rohlings abhängen. Der Neigungswinkel kann Beträge im Bereich zwischen 0 Grad und 45 Grad, vorzugsweise im Bereich von 5 Grad bis 25 Grad annehmen. Über die Positioniereinrichtung kann der Neigungswinkel auch während der Bearbeitung des Rohlings verändert und auf einen gewünschten Wert eingestellt werden. Insbesondere, wenn der Rohling aus mehreren Schichten unterschiedlichen Materials besteht und sich das zu bearbeitende Material dadurch im Laufe der Bearbeitung ändert, kann der vorgegebene Neigungswinkel zwischen unterschiedlichen Werten an das jeweilige Material angepasst werden.

Die Pulsfläche kann eine im Wesentlichen rechteckförmige Kontur aufweisen. Die die Pulsfläche bildenden Auftreffstellen sind dabei innerhalb einer Rechteckkontur nebeneinander angeordnet, so dass mehrere der an den Auftreffstellen durch die Laserstrahlimpulse gebildeten Krater die Rechteckkontur berühren. Anders ausgedrückt sind die äußeren Auftreffstellen der Pulsfläche auf einer Rechtecklinie angeordnet. Anstelle einer rechteckförmigen Pulsfläche können auch andere Polygonflächen, elliptische oder kreisrunde Flächen oder ringsegmentförmige Flächen vorgegeben sein. Die Form der Pulsfläche kann an den zu erreichenden Materialabtrag und den zu erreichenden gewünschten Konturverlauf des aus dem Rohling zu erzeugenden Werkstücks angepasst werden.

Die Größe der Pulsfläche kann während der Erstellung der Spannut variieren. Beispielsweise kann die Pulsfläche mit zunehmender Tiefe der Spannut kleiner werden. Auf diese Weise lassen sich sehr einfach verschiedene Geometrien der Spannut erzeugen. Die Pulsfläche kann bis auf eine Pulslinie reduziert werden.

Die Ablenkeinrichtung richtet die Laserstrahlimpulse auf Auftreffstellen, die entlang einer vorgegebenen Pulsbahn angeordnet sind. Die Pulsbahn hängt dabei von der Form der Pulsfläche ab und weist vorzugsweise einen mäanderförmigen oder spiralförmigen Verlauf auf. Dabei kann die Pulsbahn eine Auftreffstelle als Startpunkt und eine Auftreffstelle als Endpunkt aufweisen, wobei der Endpunkt an dem Rand der Pulsfläche angeordnet ist, der der herzustellenden Kontur zugeordnet ist. Der den Endpunkt aufweisende Bahnendabschnitt der Pulsbahn ist bevorzugt parallel oder tangential zur Relativbewegungsrichtung ausgerichtet. Bei der Rückstellbewegung vom Endpunkt zum Startpunkt wird ein relativ großer Verstellweg zurückgelegt, der deutlich größer ist, als die anderen Verstellwege zwischen zwei aufeinanderfolgenden Auftreffstellen entlang der Pulsbahn. Da die Genauigkeit der Positionierung der Laserstrahlimpulse durch die Ablenkeinrichtung begrenzt ist und die Ablenkeinrichtung zum Überschwingen neigt, ist die Bewegungsrichtung der Rückstellbewegung von der herzustellenden Kante und/oder Fläche weg gerichtet. Dadurch können qualitative Beeinträchtigungen der herzustellenden Kontur vermieden werden.

Der Abstand zwischen zwei aufeinanderfolgenden Auftreffstellen entlang der Pulsbahn kann wunschgemäß vorgegeben werden, insbesondere durch Wahl oder Einstellung der Impulsfrequenz des Lasers und der Verstellgeschwindigkeit der Ablenkeinrichtung.

Zwei aufeinander folgende Laserstrahlimpulse können auf unterschiedliche Auftreffstellen in der Pulsfläche gerichtet sein. Alternativ hierzu ist es auch möglich, eine Impulsfolge mit zwei oder mehr Laserstrahlimpulsen auf dieselbe Auftreffstelle zu richten und erst die nächste Impulsfolge auf eine davon verschiedene Auftreffstelle zu richten. Die Energie des Einzelimpulses oder der auf eine Auftreffstelle gerichtete Impulsfolge ist vorgegeben und verteilt sich entsprechend der Anzahl der verwendeten Impulse. Je größer die Anzahl der in einer Impulsfolge enthaltenen Laserstrahlimpulse ist, desto geringer ist die in einem einzelnen Laserstrahlimpuls enthaltene Energie.

Das Entfernen des die zu erzeugende Fläche bedeckenden, abzutragenden Materialteils des Rohlings erfolgt schichtweise in mehreren im Wesentlichen parallel zur Pulsfläche verlaufenden Abtragschichten. Die Dicke der Abtragsschicht - in Abstrahlrichtung der Laserstrahlimpulse gesehen - hängt ab von der Impulsfrequenz des Lasers und der Relativgeschwindigkeit der Pulsfläche gegenüber dem Rohling. Es können Schichtdicken von mehreren Hunderstel Millimetern erreicht werden. Die Abtragsschichten verlaufen quer vor der herzustellenden Fläche.

Bevorzugt erfolgt nach dem Abtragen jeder Abtragsschicht eine Anpassung bzw. Justierung der Fokuslage der Laserstrahlimpulse über eine Fokussieroptik oder die Positioniereinrichtung.

Es ist auch möglich, weitere Bearbeitungsparameter materialabhängig vorzugeben. Beispielsweise kann die Intensität der Laserimpulse während des Abtragens des Materials variieren. Dadurch können Abweichungen von der gewünschten Werkzeugform reduziert werden.

Mit Hilfe einer Prozessgaszufuhr kann ein auf den Rohling gerichteten Prozessgasstrom erzeugt werden. Der Prozessgasstrom ist insbesondere schräg zur Pulsfläche ausgerichtet. Das während der Sublimation entstehende Plasma wird über den Prozessgasstrom aus dem Bearbeitungsbereich des Lasers entfernt. Bevorzugt weist die Prozessgaszufuhr mehrere beabstandete Prozessgasdüsen auf, die jeweils einen Teilstrom aus unterschiedlichen Richtungen auf den Bearbeitungsbereich in der Umgebung der Pulsfläche richten.

Vorteilhafte Merkmale der Erfindung ergeben sich aus den abhängigen Patentansprüchen und der Beschreibung. Die Beschreibung beschränkt sich dabei auf wesentliche Merkmale der Erfindung sowie sonstiger Gegebenheiten. Die Zeichnung ist ergänzend heranzuziehen. Es zeigen:
Figur 1 ein Blockschaltbild eines Ausführungsbeispiels einer Laserbearbeitungsvorrichtung,
Figur 2 eine schematische Seitenansicht eines Ausführungsbeispiels einer Laserbearbeitungsvorrichtung,
Figuren 3-5 verschiedene Formen von Pulsflächen,
Figur 6 eine schematische Schnittdarstellung durch zwei Auftreffstellen,
Figur 7 eine Darstellung des Rohlings im Querschnitt während der Herstellung einer Spannut,
Figur 8 eine Darstellung des Rohlings im Querschnitt während des Materialabtrags an der Außenseite vor dem Erzeugen der Schneidkanten,
Figur 9 eine Darstellung des Rohlings im Querschnitt während der Herstellung einer Schneidkante,
Figur 10 einen Rohling in perspektivischer schematischer Darstellung mit einer in Richtung der Längsachse verlaufenden Spannut,
Figur 11 einen Rohling in perspektivischer schematischer Darstellung mit einer schräg zur Längsachse verlaufenden Spannut,
Figur 12 den Rohling aus Figuren 10 oder 11 im Längsschnitt im Bereich des auslaufenden schaftseitigen Spannutendes und die schematische Relativbewegung zwischen Rohling und Pulsfläche,
Figur 13 einen Rohling in schematischer Seitenansicht mit einer spiralförmigen Spannut,
Figur 14 die Intensität von Laserstrahlimpulsen bzw. Impulsfolgen über der Zeit,
Figur 15 eine schematische, blockschaltbildähnliche Darstellung eines weiteren Ausführungsbeispiels der Laserbearbeitungsvorrichtung mit einer Vakuumkammer,
Figur 16 eine schematische, blockschaltbildähnliche Darstellung einer Abwandlung des Ausführungsbeispiels nach Figur 14,
Figur 17 eine perspektivische Teildarstellung des Arbeitsbereichs des hergestellten Werkzeugs mit einer Stützfase im Anschluss an die Schneidkante und
Figur 18 eine perspektivische Teildarstellung des Arbeitsbereichs des hergestellten Werkzeugs mit einer Spanleitstufe im Anschluss an die Schneidkante.

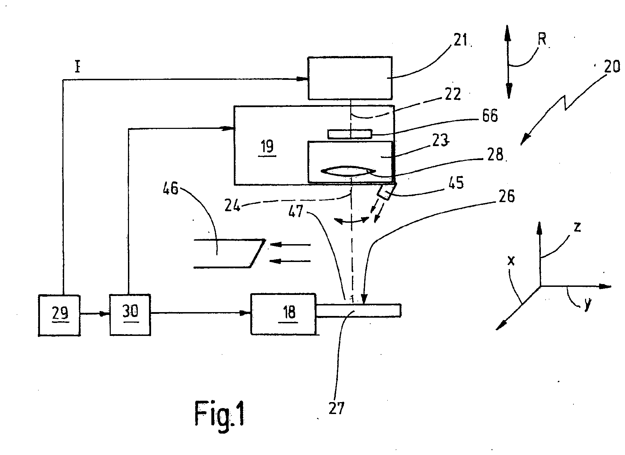

In Figur 1 ist schematisch eine Laserbearbeitungsvorrichtung 20 dargestellt. Die Laserbearbeitungsvorrichtung 20 weist einen gepulsten Laser 21 auf, der einen gepulsten Laserstrahl 22 erzeugt und einem Laserkopf 19 mit einer Ablenkeinrichtung 23 zuführt. Die Ablenkeinrichtung 23 kann die Ausrichtung von abgegebenen Laserstrahlimpulsen 24 verändern und dadurch den Laserstrahlimpuls 24 auf eine vorgegebene Auftreffstelle 25 auf einer Oberfläche 26 eines Rohlings 27 richten. Die Ablenkeinrichtung 23 kann auch als Scannereinrichtung bezeichnet werden. Sie umfasst auch eine Fokussieroptik 28. An einer Werkstückhalterung 18 ist der Rohling 27 in einem Aufnahmebereich 47 gehalten.

Die Laserbearbeitungsvorrichtung 20 weist eine Steuereinrichtung 29 auf. Diese steuert eine Positioniereinrichtung 30, über die eine Relativposition zwischen dem Laserkopf 19 und dem Rohling 27 eingestellt und verändert werden kann. Die Anzahl der linearen Achsen und Drehachsen der Positioniereinrichtung 30 kann variieren.

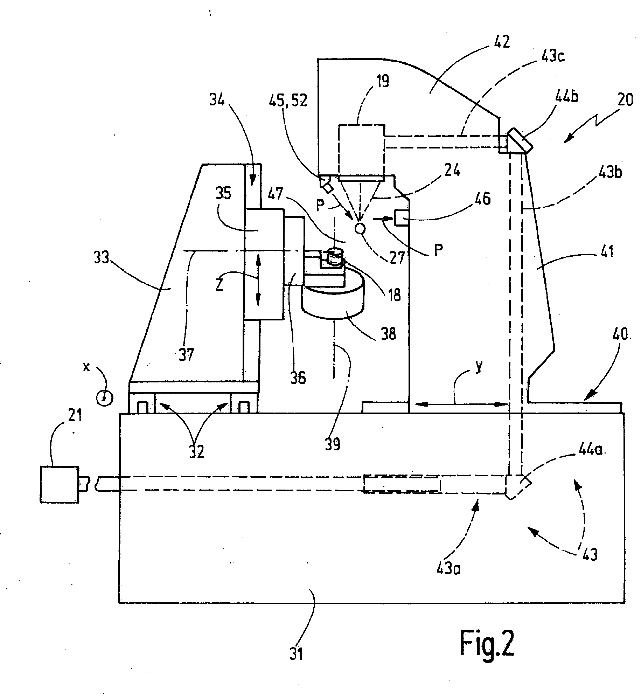

Ein Ausführungsbeispiel einer Laserbearbeitungsmaschine 20 ist in Figur 2 in Seitenansicht veranschaulicht. Die Laserbearbeitungsmaschine 20 weist ein Grundelement 31 auf, das als Maschinenbett dient. Hierfür ist auf dem Grundelement eine erste Schienenführung 32 angebracht, mittels der ein erster Schlitten 33 in eine erste Richtung x auf dem Maschinenbett bewegt werden kann. Am ersten Schlitten 33 ist die Werkstückhalterung 18 in eine zweite Richtung z verschiebbar angeordnet. Die zweite Richtung z verläuft rechtwinklig zur ersten Richtung x. Am ersten Schlitten 33 ist hierfür eine in die zweite Richtung z verlaufende zweite Schienenführung 34 vorgesehen, auf der ein zweiter Schlitten 35 bewegbar gelagert ist. Auf dem zweiten Schlitten 35 sitzt eine erste Schwenkanordnung 36, deren Schwenkachse 37 in eine dritte Richtung y verläuft, die sowohl zur ersten Richtung x, als auch zur zweiten Richtung z rechtwinklig ausgerichtet ist. Die erste Schwenkanordnung 36 trägt eine zweite Schwenkanordnung 38. Die zweite Schwenkachse 39 der zweiten Schwenkanordnung 38 ist rechtwinklig zur ersten Schwenkachse 37 ausgerichtet. Die Werkstückhalterung 18 zum Einspannen des Rohlings 27 ist beim Ausführungsbeispiel koaxial zur zweiten Schwenkachse 39 ausgerichtet. Ein in der Werkstückhalterung 18 eingespannter zylindrischer Rohling 27 ist daher koaxial zur zweiten Schwenkachse 39 gehalten. Bei einer Drehung der zweiten Schwenkanordnung rotiert der Rohling 27 um seine Längsachse L.

Auf dem Grundelement 31 ist eine weitere, dritte Schienenführung 40 angeordnet, auf der ein den Laserkopf 19 tragender dritter Schlitten 41 in die dritte Richtung y verschiebbar angeordnet ist. Der dritte Schlitten 41 weist ein Oberteil 42 auf, in dem der Laserkopf 19 sitzt. Die Laserstrahlimpulse 24 werden in Richtung des Grundelements 31 in den Aufnahmebereich 47 abgestrahlt.

Die Schlitten 33, 35 41 sind beispielsgemäß linear verschiebbar.

Der vom gepulsten Laser 21 abgegebene Laserstrahl verläuft vom Laser 21 bis zum Laserkopf 19 in einer rohrförmigen Laserstrahlleitung 43. Ein erster Leitungsabschnitt 43a erstreckt sich im Grundelement 31 in die dritte Richtung y. Der erste Leitungsabschnitt 43a ist als Teleskoprohr ausgeführt, um die Länge des ersten Leitungsabschnitts 43a an die Bewegung des dritten Schlittens 41 in die dritte Richtung y anpassen zu können. An den ersten Leitungsabschnitt 43a ist ein zweiter Leitungsabschnitt 43b über einen ersten Umlenkspiegel 44a angeschlossen. Der zweite Leitungsabschnitt 43b verläuft aus dem Grundelement 31 heraus in den dritten Schlitten 41 hinein bis zu dessen Oberteil 42. Dort ist er über einen zweiten Umlenkspiegel 44b mit einem dritten Leitungsabschnitt 43c verbunden, an dessen Ende der Laserkopf 19 angeordnet ist.

Die Positioniereinrichtung 30 weist Antriebseinrichtungen auf, die zum Bewegen und Positionieren der Schlitten 33, 35, 41 sowie der Schwenkanordnungen 36, 38 dienen. Auf diese Weise kann die Relativposition und die Relativbewegung zwischen den Laserstrahlimpulsen 24 und dem Rohling 27 durch die Positioniereinrichtung 30 gemäß den Vorgaben der Steuereinrichtung 29 eingestellt werden. Als Schwenkantriebe können beispielsweise Torque-Motoren verwendet werden und als Antriebe für die Bewegung der Schlitten 33, 35, 41 werden vorzugsweise Linearantriebe, beispielsweise Linearmotorachsen und vorzugsweise Direktantriebe eingesetzt. Die Positioniereinrichtung 30 bewirkt die Relativbewegung zwischen dem Laserkopf 19 und der Werkstückhalterung 18 und damit den dort eingespannten Rohling 27. Diese Relativbewegung kann eine beliebige Bahn in den durch die drei Richtungen x, y, z definierten Raum beschreiben.

In Abwandlung zum dargestellten Ausführungsbeispiel könnte der Laserkopf 19 auch unbeweglich gegenüber dem Grundelement 31 angeordnet sein. Die Relativbewegung zwischen Laserkopf 19 und der Werkstückhalterung 18 in die dritte Richtung y könnte dabei durch einen weiteren Schlitten zwischen dem Grundelement 31 und der ersten Schlittenführung 32 oder zwischen der ersten Schlittenführung 32 und dem ersten Schlitten 33 erfolgen. Es ist außerdem möglich, eine weitere, dritte Schwenkachse und eine zugehörige Schwenkanordnung vorzusehen. Bei einfacheren Laserbearbeitungsmaschinen kann die Anzahl der Maschinenachsen auch reduziert werden.

Die Steuereinrichtung 29 steuert auch den Laserkopf 19 an, um Bearbeitungsparameter für die Bearbeitung des Rohlings 27 einzustellen oder zu verändern. Bei den Bearbeitungsparametern handelt es sich um die Intensität I der Laserstrahlimpulse 24 sowie eventuell auch um die Impulsfrequenz f des Lasers 21 und/oder die Brennweite der Fokussieroptik 28. Der Frequenzbereich kann sich von 1 MHz bis 10 MHz erstrecken oder lediglich einen Teilbereich innerhalb dieses Frequenzbereichs umfassen.

Die Laserbearbeitungsmaschine 20 verfügt außerdem über eine Prozessgaszufuhr 45, sowie eine Prozessgasabsaugung 46, um einen Prozessgasstrom P im Aufnahmebereich 47 zu erzeugen. Der Prozessgasstrom P dient zur Entfernung des bei der Laserablation durch Sublimation des Materials entstehenden Plasmas. Eine Plasmawolke im Bereich der zu bearbeitenden Stelle am Rohling 27 kann die Effizienz des Materialabtrags reduzieren, da ein Teil der in den Laserstrahlimpulsen 24 enthaltenen Energie bereits vom Plasma aufgenommen wird. Durch das Entfernen des Plasmas vom Rohling 27 wird der ungehinderte Materialabtrag durch die Laserstrahlimpuls 24 gewährleistet.

Beispielsgemäß befindet sich die Prozessgasabsaugung 46 in die zweite Richtung z gesehen etwa auf Höhe des zu bearbeitenden Rohlings 27, der in Figur 2 in einer möglichen Bearbeitungsposition gestrichelt eingezeichnet ist. Der Prozessgasstrom P verläuft vom Rohling 27 bis zur Prozessgasabsaugung 46 in etwa in die dritte Richtung y. Die Prozessgaszufuhr 45 ist vorzugsweise benachbart zum Laserkopf 19 angeordnet. Wie in Figur 2 dargestellt sind der Laserkopf 19 und die Prozessgaszufuhr 45 nebeneinander am Oberteil 42 des dritten Schlittens 41 angebracht. Das von der Prozessgaszufuhr 45 ausgestoßene Prozessgas ist daher schräg auf den zu bearbeitenden Rohling 27 gerichtet. Beispielsgemäß verläuft der Prozessgasstrom P zwischen der Prozessgaszufuhr 45 und dem Rohling 27 schräg zu einer Ebene, die von der ersten Richtung x und von der dritten Richtung y aufgespannt wird. Die Prozessgaszufuhr 45 kann eine oder mehrere Prozessgasdüsen 52 aufweisen. Bei dem hier beschriebenen Ausführungsbeispiel sind drei Prozessgasdüsen 52 in der ersten Richtung x nebeneinander angeordnet. Aus jeder Prozessgasdüse 52 tritt ein Teilstrom aus, der auf die Umgebung der bearbeiteten Stelle am Rohling 27 gerichtet ist. Es ist auch möglich, die Abstrahlrichtung der Prozessgasdüsen 52 durch beispielsweise verschwenkbare Prozessgasdüsen 52 einstellbar auszuführen. Die Prozessgasabsaugung 46 ist gemeinsam mit dem dritten Schlitten 41 in die dritte Richtung y bewegbar. Zusätzlich kann die Prozessgasabsaugung 46 auch in die zweite Richtung z und/oder in die erste Richtung x verstellbar am dritten Schlitten 41 gelagert sein.

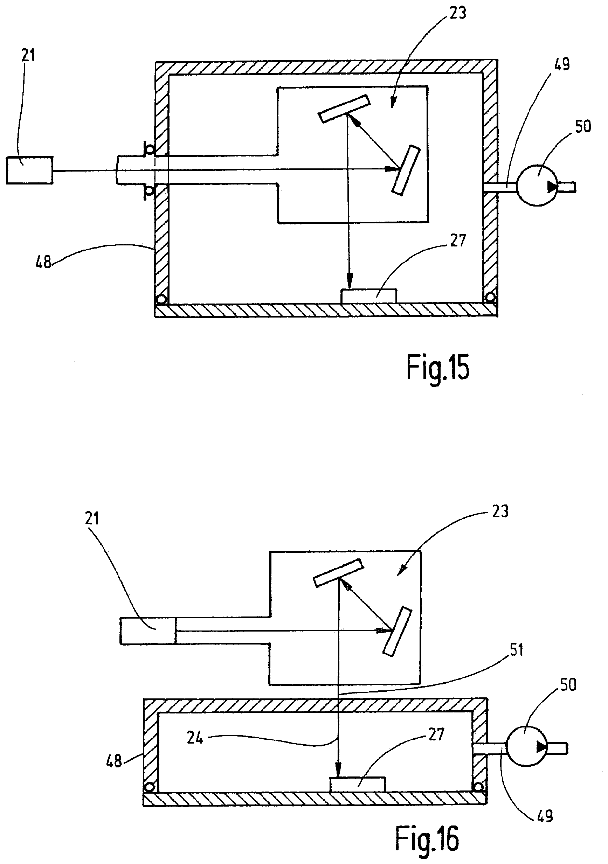

Bei den in den Figuren 15 und 16 gezeigten Ausführungsbeispielen ist alternativ zur Erzeugung des Prozessgasstromes P eine Vakuumkammer 48 vorgesehen, wobei sich die Werkstückhalterung 18 und der Aufnahmebereich 47 für den Rohling 27 innerhalb der Vakuumkammer 48 befinden. Über eine Absaugleitung 49 ist die Vakuumkammer 48 an eine Vakuumpumpe 50 angeschlossen, so dass im Aufnahmebereich 47 ein Vakuum hergestellt werden kann. Die Ablenkeinrichtung 23 kann dabei entweder innerhalb der Vakuumkammer 48 angeordnet sein (Figur 15) oder sich alternativ außerhalb der Vakuumkammer 48 befinden, wie dies beispielsweise in den Figuren 2 und 16 gezeigt ist. In diesem Fall muss die Vakuumkammer 48 im Bereich der Eintrittsstelle 51 des Laserstrahlimpulses 24 transparent sein für die verwendete Laserwellenlänge.

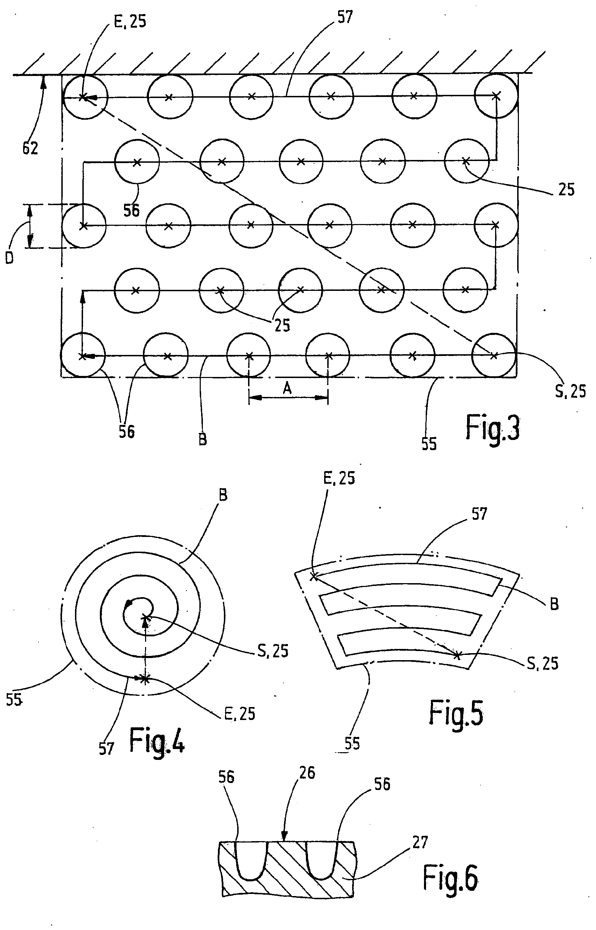

Mit Hilfe der Ablenkeinrichtung 23 werden die Laserstrahlimpulse 24 im Bereich einer Pulsfläche 55 auf die Oberfläche 26 des Rohlings 27 ausgerichtet. Ein Laserstrahlimpuls 24 trifft an der Auftreffstelle 25 auf die Oberfläche 26 auf und verursacht dort einen Materialabtrag, wodurch sich ein trichterförmiger Krater 56 bildet, wie dies in Figur 6 schematisch veranschaulicht ist. Als Auftreffstelle 25 wird hier der Mittelpunkt bzw. die Mittelachse des Kraters 56 bezeichnet. Eine Vielzahl von vorgegebenen, beabstandeten Auftreffstellen 25 bildet die Pulsfläche 55.

Die Steuereinrichtung 29 gibt der Ablenkeinrichtung 23 eine Pulsbahn B für das Anordnen aufeinanderfolgender Auftreffstellen 25 vor. Die Ablenkeinrichtung 23 richtet die Laserstrahlimpulse 24 nacheinander auf die Auftreffstellen 25 der Pulsbahn B. Der Verlauf der Pulsbahn B hängt von der Form der Pulsfläche 55 ab und weist bei der rechteckigen Pulsfläche 55 nach Figur 3 einen mäandrierenden Verlauf auf, der aus geradlinigen Teilverläufen zusammengesetzt ist. Eine Auftreffstelle 25 in einem der Eckpunkte der Pulsfläche 55 bildet einen Startpunkt S, der von der herzustellenden Kante 60 oder Fläche 62 beabstandet ist. Ausgehend vom Startpunkt S werden die Laserstahlimpulse 24 entlang der Pulsbahn B platziert bis zur Auftreffstelle 25 in der diagonal gegenüberliegenden Ecke der Pulsfläche, die den Endpunkt E der Pulsbahn B markiert.

Der den Endpunkt E aufweisende Bahnendabschnitt 57 der Pulsbahn B verläuft bei der Herstellung einer Schneidkante parallel zu der herzustellenden Kante 60 oder parallel zu der an die Kante 60 angrenzenden Span- oder Freifläche 62. Dieser Bahnendabschnitt 57 grenzt unmittelbar an die herzustellenden Fläche 62 oder Kante 60 an. Nach dem Erreichen des Endpunkts E findet eine Rückstellbewegung in der Ablenkeinrichtung 23 statt und die Laserstrahlimpulse 24 werden anschließend erneut beginnend beim Startpunkt S auf der Pulsbahn B platziert. Die Rückstellbewegung ist von der herzustellenden Kontur 60, 62 weg gerichtet. Sie ist in den Figuren 3 bis 5 jeweils durch einen gestrichelten Pfeil veranschaulicht.

Der Abstand A zwischen zwei aufeinanderfolgenden Auftreffstellen 25 entlang der Pulsbahn B wird über die Impulsfrequenz f des Lasers 21 und die Verstellgeschwindigkeit der Ablenkeinrichtung 23 vorgegeben. Bei Richtungsänderungen in der Pulsbahn B kann der Abstand A auch variieren.

Bei einer Pulsfläche 55 mit runder, elliptischer oder einer anderen gekrümmten Form kann der den Endpunkt E aufweisende Bahnendabschnitt 57 auch tangential zur herzustellenden Kontur 60, 62 verlaufen (Figur 4). Die Pulsbahn B ist dabei spiralförmig. Die Pulsfläche 55 kann auch die Form eines Ringsegments haben (Figur 5).

Alternativ zum Ausrichten der aufeinander folgenden Laserstrahlimpulse 24 entlang einer mäander- oder schlangenförmigen Bahn können auch andere in der Steuereinrichtung 29 vorgegebene Pulsbahnen gewählt werden, bei denen nacheinander alle die Pulsfläche 55 definierenden Auftreffstellen 25 vom Startpunkt S zum Endpunkt E durchlaufen werden. Vorzugsweise sind der Startpunkt S und der Endpunkt E in Richtung des Prozessgasstromes P möglichst weit voneinander beabstandet, wobei das Prozessgas vom Endpunkt E zum Startpunkt S strömt.

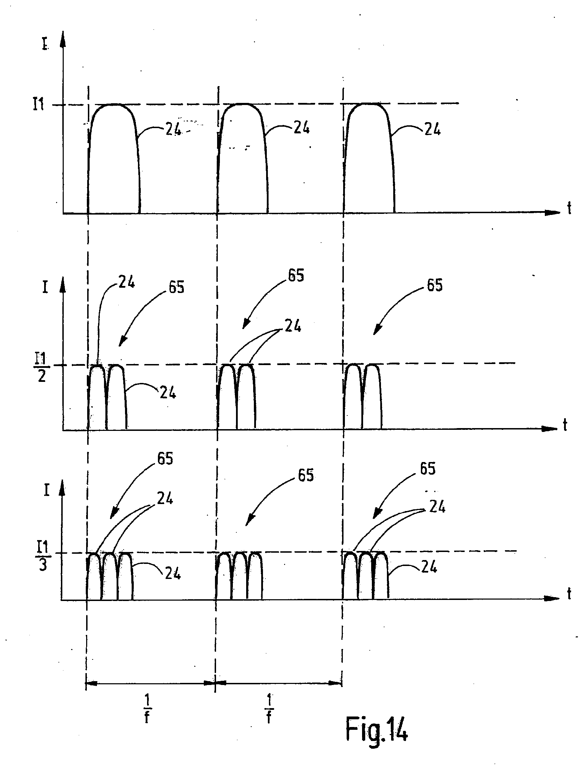

Beim bevorzugten Ausführungsbeispiel wird auf jede Auftreffstelle 25 lediglich ein Laserstrahlimpuls 24 gerichtet, während der nächste Laserstrahlimpuls 24 auf eine andere Auftreffstelle 25 der Pulsfläche 55 gerichtet wird. Ein solches Verfahren ist in Figur 14 im oberen Schaubild dargestellt. Der zeitliche Abstand zwischen zwei aufeinander folgenden Laserstrahlimpulsen 24 ergibt sich aus dem Kehrwert der aktuellen Impulsfrequenz f des Lasers 21. Der gepulste Laser 21 kann als Nano-, Piko- oder Femtosekundenlaser ausgestaltet sein.

Werden aufeinander folgende Laserstrahlimpulse 24 auf unterschiedliche Auftreffstellen 25 gerichtet, so haben diese Laserstrahlimpulse 24 die Intensität I1. Wie in den beiden anderen Diagrammen in Figur 14 gezeigt, können auf eine Auftreffstelle 25 auch zwei oder mehr Laserstrahlimpulse 24 gerichtet werden, bevor die nächste Auftreffstelle 25 angesteuert wird. Mit anderen Worten richtet die Ablenkeinrichtung 23 auf eine Auftreffstelle 25 zunächst eine Impulsfolge 65 mehrerer Laserstrahlimpulse 24, bevor die anschließende Impulsfolge 65 auf eine andere Auftreffstelle 25 gerichtet wird. Die in einer Impulsfolge 65 enthaltene auf eine Auftreffstelle 25 einwirkende Energie soll dabei einem einzelnen Laserstrahlimpuls 24 mit der Intensität I1 entsprechen. Daher wird die Intensität I eines einzelnen Laserstrahlimpulses 24 einer Impulsfolge 65 reduziert. Bei dem hier dargestellten Ausführungsbeispiel ist die Gesamtintensität I einer Impulsfolge 65 konstant. Daher entspricht die Intensität I eines einzelnen Laserstrahlimpulses 24 in einer Impulsfolge 65 dem Quotienten aus der Intensität I1 geteilt durch die Anzahl der in der Impulsfolge 65 enthaltenen Laserstrahlimpulse 24.

Der Durchmesser D der Krater 56 hängt vom wirksamen Durchmesser der Laserstrahlimpulse 24 an der Auftreffstelle 25 ab, der über die Fokussieroptik 28 vorgegeben und vorzugsweise eingestellt und insbesondere auch während der Bearbeitung verändert werden kann.

Im Laserkopf 19 kann auch eine Einrichtung 66 zur Strahlhomogenisierung des gepulsten Laserstrahls 22 vorgesehen sein. Die Einrichtung 66 zur Stahlhomogenisierung bewirkt eine homogenere Energieverteilung innerhalb der Querschnittsfläche des Laserstrahlimpulses. Als Einrichtung 66 können refraktive oder diffraktive Strahlhomogenisierer verwendet werden. Es ist dabei möglich, Rechteck-Intensitätsprofile mit Inhomogenitäten von weniger als 2% zu erreichen. Durch die Verwendung einer solchen Einrichtung 66 zur Strahlhomogenisierung sind die Impulsflanken der einzelnen Laserstrahlimpulse 24 sehr steil, wie dies in Figur 14 schematisch veranschaulicht ist. Um die Auftreffstelle 25 wird im Bereich des Laserspots eine gleichmäßige Sublimation des abzutragenden Materials erreicht. Dadurch lässt sich die Erwärmung des bearbeiteten Rohlings 27 während der Bearbeitung weiter reduzieren.

Während über die Ablenkeinrichtung 23 eine zweidimensionale, räumlich begrenzte Pulsfläche 55 bearbeitet wird, veranlasst die Positioniereinrichtung 30 gleichzeitig eine Relativbewegung der Pulsfläche 55 auf der Oberfläche 26 des Rohlings 27. Mit anderen Worten bewegt sich der durch die Pulsfläche 55 mit der Vielzahl von Auftreffstellen 25 der Laserstrahlimpulse 24 gebildete Materialabtragsbereich mit einer vorgegebenen Relativgeschwindigkeit vrel.

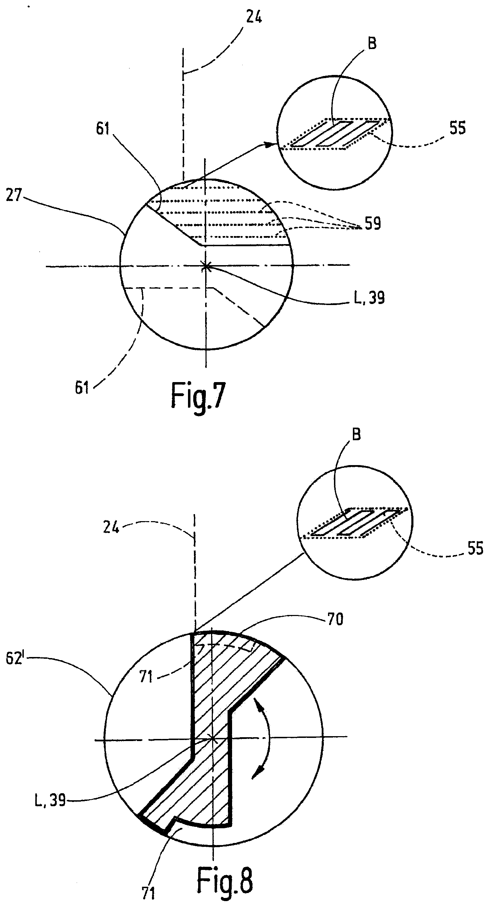

In den Figuren 7 bis 9 sind drei Verfahrensschritte dargestellt, um aus einem zylindrischen Rohling 27 ein Rotationswerkzeug mit einer oder mehreren Schneidkanten 60 und einer oder mehreren Spannuten 61.

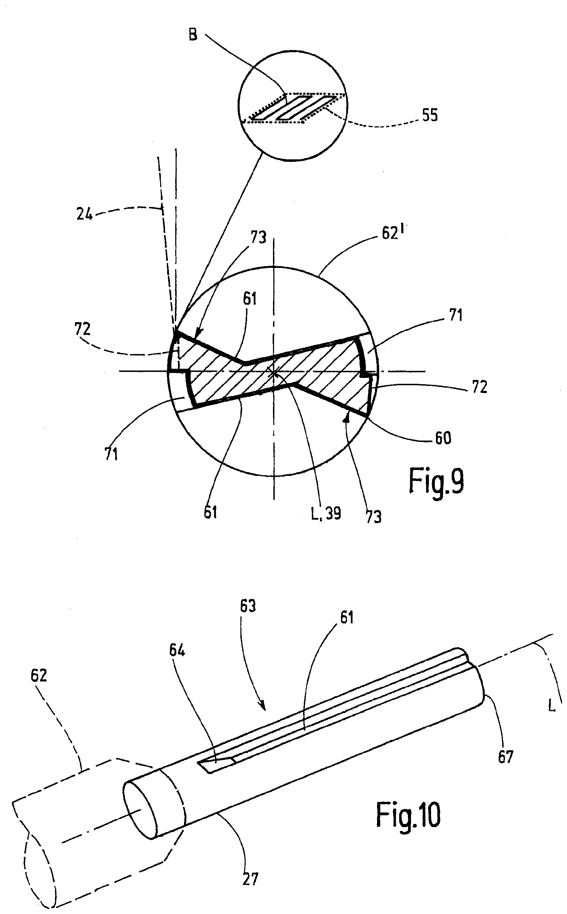

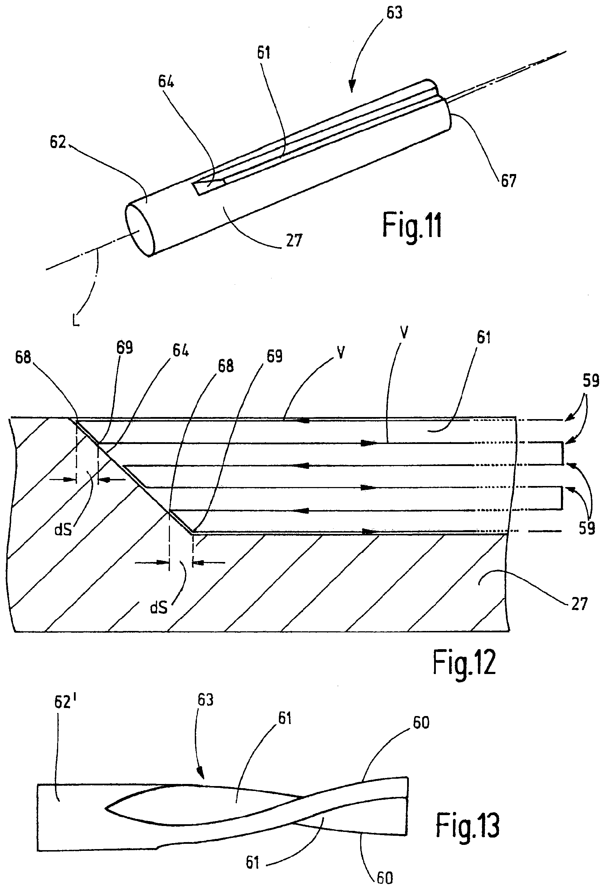

Im ersten Verfahrensschritt nach Figur 7 wird eine Spannut 61 in den Rohling 27 eingebracht. Hierfür wird das Material in mehreren Abtragsschichten 59 durch die Verschiebung der Pulsfläche 55 über die Oberfläche des Rohlings 27 schichtweise entfernt, so dass sich die gewünschte Spannut 61 bildet. Die Größe der Pulsfläche 55 kann variiert werden. Dadurch ist es möglich, die Größe der Pulsfläche 55 an die gewünschte Form der herzustellenden Spannut 61 anzupassen. Beispielsweise kann bei einer sich zum Nutgrund verjüngenden Spannut 61 die Größe der Pulsfläche 55 von einer Abtragsschicht 59 zur nächsten Abtragsschicht 59 verkleinert werden. Durch die entlang des Rohlings 27 bewegte Putzfläche 55 lassen sich die Spannuten 61 nahezu beliebig formen. Es können Kanten mit stumpfen oder spitzen Winkeln in der Spannut 61 ausgebildet werden. Auch Hinterschneidungen an einer oder mehreren Nutflanken sind möglich. In den Figuren 10, 11 und 13 sind verschiedene Formen von Spannuten 61 schematisch gezeigt. Die Spannut 61 kann parallel zur Längsachse L verlaufen (Figur 10). In Abwandlung hierzu kann die Spannut 61 auch schräg zur Längsachse L des zylindrischen Rohlings 27 ausgerichtet werden. Beim Ausführungsbeispiel nach Figur 11 erstreckt sich die Spannut 61 geradlinig, wobei die Kanten der Nut mit einer parallelen zur Längsachse L des zylindrischen Rohlings 27 einen spitzen Winkel einschließen. Bei einer weiteren Werkzeugform können die Spannuten 61 spiralförmig in Richtung der Längsachse L verlaufen. Ein solches Ausführungsbeispiel ist in Figur 13 schematisch dargestellt.

Das aus dem Rohling 27 herzustellende Werkzeug weist einen Schaft 62 auf, an den sich der die Spannut 61 und die Schneidkante 60 aufweisende Arbeitsbereich 63 anschließt. Der Schaft 62 und der Arbeitsbereich 63 können zwei verschiedene Teile sein, die miteinander verbunden sind. Beispielsweise kann der Rohling 27 einen Stift darstellen, der in einen Hartmetallschaft 62 eingesetzt ist. Der Stift kann ein Diamantwerkzeugeinsatz aus polykristallinem Diamant (PKD) oder CVD-Diamant (Chemical Vapor Deposition) sein. Alternativ können der Schaft 62 und der Arbeitsbereich 63 auch aus einem einstückigen Materialteil ohne Naht- und Fügestellen bestehen.

Im Bereich des dem Schaft 62 zugeordneten schaftseitigen Spannutende 64 nimmt die Tiefe der Spannut 61 radial zur Längsachse L gemessen ab. Die Spannut 61 kann zum Spannutende 64 hin beispielsweise rampenförmig auslaufen. Zur Erzeugung der Spannut 61 mit dem auslaufenden Spannutende 64 wird die Pulsfläche 55 mehrfach entlang der zu erzeugenden Spannut 61 über den Rohling 27 bewegt, wie dies in Figur 12 schematisch gezeigt ist. Bei jeder Bewegung der Pulsfläche 55 in eine Relativbewegungsrichtung V wird eine Abtragsschicht 59 entfernt. Die Abtragsschichten 59 liegen radial zur Längsachse L gesehen übereinander. Bei der ersten Relativbewegung der Pulsfläche 55 erfolgt der Materialabtrag vom freien Ende 67 des Rohlings 27 her in Richtung auf das schaftseitige Spannutende 64 zu. Wird das Spannutende 64 erreicht, muss die Bewegungsrichtung der Relativbewegung zwischen Impulsfläche 55 und Rohling 27 umgekehrt werden. Während dieser Bewegungsumkehr werden die Laserstrahlimpulse 24 abgeschaltet. Die Laserstrahlimpulse 24 werden erst wieder eingeschaltet, wenn die Relativbewegungsrichtung V umgekehrt wurde und zwischen dem Ende 68 der entfernten Abtragsschicht und dem Beginn 69 der aktuellen Abtragsschicht 59 eine Verschiebung dS in Richtung des Spannutverlaufs erreicht wurde. Der Betrag der Verschiebung dS hängt von der gewünschten Steigung des auslaufenden Nutgrunds im Bereich des schaftseitigen Nutendes 64 ab. Bewegt sich die Pulsfläche 55 vom schaftseitigen Spannutende 64 zum freien Ende 67 hin, so findet eine Richtungsumkehr dieser Relativbewegung erst statt, wenn die Pulsfläche 55 den Rohling 27 vollständig verlassen hat. Ein Abschalten der Laserimpulse 24 ist bei der Richtungsumkehr am freien Ende 67 nicht notwendig. Die Verschiebung dS zwischen dem Ende 68 einer Abtragsschicht und dem Beginn 69 der darauf folgenden Abtragsschicht kann abhängig von der Tiefe der Nut unterschiedlich groß sein, wenn eine sich ändernde Steigung des Nutgrundes im Bereich des schaftseitigen Spannutendes 64 erreicht werden soll.

Beim Ausführungsbeispiel werden im ersten Verfahrensschritt nach Figur 7 zwei Spannuten 61 erzeugt. Die sich dabei im Arbeitsbereich 63 ergebende Querschnittsform des Rohlings 27 ist punktsymmetrisch zu seiner Längsachse L.

In einem zweiten, optionalen Verfahrensschritt gemäß Figur 8 erfolgt ein Materialabtrag an der Außenseite 70 benachbart zur erzeugten Spannut 61. Beim Ausführungsbeispiel wird ein Segment von der ursprünglichen Mantelfläche des zylindrischen Rohlings 27 her radial nach innen abgetragen, das eine Freistellungsvertiefung 71 darstellt. In Radialrichtung zur Längsachse L gemessen ist die Abtragtiefe konstant. Die Pulsfläche 55 wird dabei mehrfach entlang der Längsachse L des Rohlings 27 bewegt. Die Abtragsschichten liegen somit in Radialrichtung übereinander.

Die Entfernung dieser Freistellungsvertiefung 71 kann erforderlich oder zweckmäßig sein, um den bei der anschließenden Herstellung der Schneidkante 60 erforderlichen Materialabtrag zu reduzieren. Dies kann beispielsweise bei großen Freiwinkeln der Fall sein. Sind die Spannuten 61 in Umfangsrichtung gesehen sehr groß oder sind ausreichend viele Spannuten 61 vorhanden, kann das Ausbilden der Freistellungsvertiefung 71 an der Außenseite 70 gemäß dem hier vorgesehenen zweiten Verfahrensschritt entfallen.

Anschließend wird in einem dritten Verfahrensschritt (Figur 9) die wenigstens eine Schneidkante 60 hergestellt. Bei dem hier beschriebenen Ausführungsbeispiel sind zwei Schneidkanten 60 vorhanden. Während der Erzeugung der Schneidkante 60 wird hier die Freifläche 72 freigelegt. Die Freifläche 72 ist zwischen der Freistellungsvertiefung 71 und der Spannut 61 vorgesehen. Die Spanfläche 73 ist angrenzend an die Schneidkante 60 in der Spannut 61 vorgesehen. Die Spanfläche 73 wurde bereits beim Ausräumen der Spannut 61 hergestellt.

Während der Erzeugung der Freifläche 72 bzw. der Schneidkante 60 ist die Relativgeschwindigkeit zwischen der Pulsfläche 55 und dem Rohling 27 stets ungleich null, solange zumindest ein Teil der Pulsfläche 55 auf die Oberfläche 26 des Rohlings 27 auftrifft. Dabei entstehen sehr ebene Kanten- und Flächenverläufe. Gerade bei der Herstellung der Schneidkante 60 des Schneidwerkzeugs ist ein ebener Verlauf besonders wichtig.

Während der Herstellung der Schneidkante 60 kann über die Positioniereinrichtung 30 ein Neigungswinkel α zwischen der Abstrahlrichtung R der Laserstrahlimpulse 24 und einer Ebene F, in der sich die herzustellende Freifläche 72 befindet, eingestellt werden. Bei einem gekrümmten Flächenverlauf der Freifläche 72 stellt die Ebene F eine Tangentialebene an die aktuell durch die Pulsfläche 55 bearbeitete Stelle dar. Der Neigungswinkel α ist durch die Steuereinrichtung 29 vorgegeben und kann während der Bearbeitung verändert werden. Beispielsweise kann der Neigungswinkel α an das zu bearbeitende Material des Rohlings 27 angepasst sein.

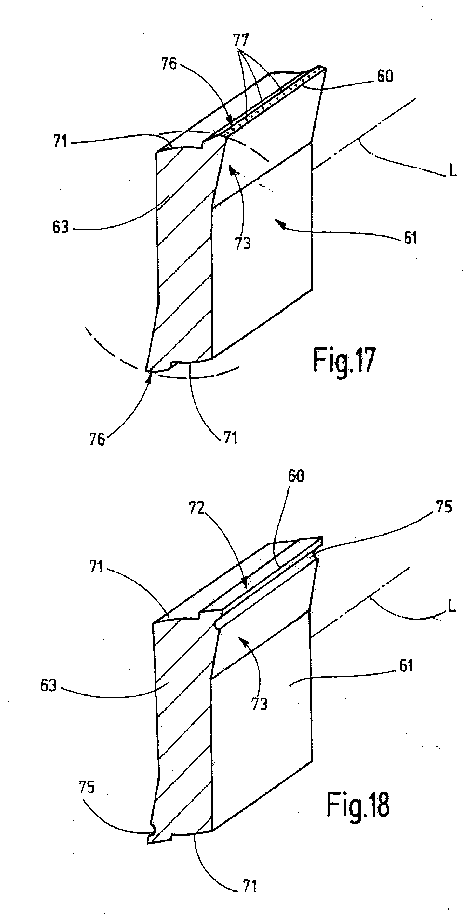

In einem weiteren optionalen Verfahrensschritt können im Anschluss an die Herstellung der Schneidkante 60 bzw. der Schneidkanten 60 Spanleitstufen 75 in der Spanfläche 73 entlang der Schneidkante 60 erzeugt werden, um den Spanbruch bei der Bearbeitung zu verbessern (Figur 18). Weiterhin besteht die Möglichkeit, dass im Bereich der ursprünglichen Mantelfläche des Rohlings 27 eine Stützfase 76 erhalten bleibt, die auf demselben Radius um die Längsachse L liegt, wie die Schneidkante 60 oder etwas darunter. Die Stützfase 76 ist mit einer Mikrostrukturierung versehen. Insbesondere weist die Stützfase an ihrer radialen Außenfläche mehrere konkave Vertiefungen 77 auf, in denen sich beim Einsatz des Werkzeugs Kühlschmierstoff sammeln kann. Dadurch lassen sich Reibungskräfte reduzieren und die Standzeit des Werkzeugs verlängern. In Figur 17 sind diese Vertiefungen 77 übertrieben groß schematisch veranschaulicht.

Die Abtragsrate pro Abtragsschicht 62 kann über die Intensität I der Laserstrahlimpulse 24 während der Herstellung des Werkzeugs variiert werden. Beispielsweise kann die Intensität I beim Herstellen der Spannut 61 und/oder beim Erzeugen der Freistellungsvertiefung 71 größer sein als bei der Herstellung der Schneidkante 60 sowie der Freifläche 72. Die Schichtdicke der Abtragsschicht 59 ändert sich dadurch entsprechend. Auch andere Parameter, wie etwa die Relativgeschwindigkeit zwischen der Pulsfläche 55 und dem Rohling 27 können in den verschiedenen Verfahrensschritten unterschiedlich vorgegeben sein, da die Anforderungen an die Ebenheit eines Kantenverlaufs oder einer Fläche unterschiedlich sind. In der Spannut 61 können größere Unebenheiten toleriert werden, als bei der Schneidkante 60.

Die Positioniereinrichtung 30 und/oder die Fokussieroptik 28 sorgen nach dem Abtragen einer Abtragsschicht 59 dafür, dass die Fokuslage für die nächste Abtragsschicht 59 wieder angepasst wird. Denn durch das Abtragen einer Materialschicht ändert sich der Abstand zwischen der Oberfläche 26 des Rohlings 27 und dem Laserkopf 19 um die Schichtdicke der entfernten Abtragsschicht 59. Dies wird am Ende jeder Abtragsschicht 59 ausgeglichen.

Die Erfindung betrifft ein Verfahren und eine Vorrichtung zur Herstellung eines Werkzeugs aus einem Rohling 27, wobei es sich insbesondere um ein Rotationswerkzeug handelt, das um seine Längsachse L rotiert. Das Rotationswerkzeug weist wenigstens eine Schneidkante 60 und eine Spannut 61 auf. Vorzugsweise ist das Rotationswerkzeug in seinem Arbeitsbereich 63 im Querschnitt gesehen punktsymmetrisch zur Längsachse L ausgestaltet. Sein Arbeitsbereich 63 wird ausschließlich durch Laserablation mit einer Laserbearbeitungsmaschine 20 aus einem zylindrischen Rohling 27 hergestellt. Die Laserbearbeitungsmaschine 20 erzeugt über einen Laserscanner eine Pulsfläche 55 mit zum Beispiel rechteckförmiger Kontur. Die Laserstrahlimpulse 24 durchlaufen innerhalb der Pulsfläche 55 eine vorgegebene Pulsbahn B mit einer Vielzahl von Auftreffstellen 25. Diese Pulsfläche 55 wird wie ein Werkzeug entlang der zu bearbeitenden Oberfläche 26 des Rohlings 27 bewegt. Dabei werden die Spannut 61 und anschließend die Schneidkante 60 durch Sublimation des Materials aus dem Rohling 27 herausgearbeitet. Die Relativbewegung zwischen einer den Rohling 27 haltenden Werkstückhalterung 18 und dem die Laserstrahlimpulse 24 abgebenden Laserkopf 19 wird durch eine Positionseinrichtung 30 mit mehreren Achsen erreicht. Die Bearbeitungsparameter sind beim Herstellen der Spannut 61 verschieden von den Bearbeitungsparametern beim Herstellen der Schneidkante 60. Als Bearbeitungsparameter sind die Intensität I der Laserstrahlimpulse 24 sowie eventuell auch die Relativgeschwindigkeit zwischen Pulsfläche 55 und Rohling 27 und/oder die Impulsfrequenz f und/oder die Größe der Pulsfläche 55 über eine Steuereinrichtung 29 vorgebbar.

### Bezugszeichenliste:

- 18: Werkstückhalterung
- 19: Laserkopf
- 20: Laserbearbeitungsmaschine
- 21: gepulster Laser
- 22: gepulster Laserstrahl
- 23: Ablenkeinrichtung
- 24: Laserstrahlimpuls
- 25: Auftreffstelle
- 26: Oberfläche v. 27
- 27: Rohling
- 28: Fokussieroptik
- 29: Steuereinrichtung
- 30: Positioniereinrichtung
- 31: Grundelement
- 32: erste Schienenführung
- 33: erster Schlitten
- 34: zweite Schienenführung
- 35: zweiter Schlitten
- 36: erste Schwenkanordnung
- 37: erste Schwenkachse
- 38: zweite Schwenkanordnung
- 39: zweite Schwenkachse
- 40: dritte Schienenführung
- 41: dritter Schlitten
- 42: Oberteil v. 41
- 43: Laserstahlleitung
- 43a: erster Leitungsabschnitt
- 43b: zweiter Leitungsabschnitt
- 43c: dritter Leitungsabschnitt
- 44a: erster Umlenkspiegel
- 44b: zweiter Umlenkspiegel
- 45: Prozessgaszufuhr
- 46: Prozessgasabsaugung
- 47: Aufnahmebereich
- 48: Vakuumkammer
- 49: Absaugleitung
- 50: Vakuumpumpe
- 51: Eintrittsstelle
- 52: Prozessgasdüse

- 55: Pulsfläche
- 56: Krater
- 57: Bahnendabschnitt

- 59: Abtragsschicht
- 60: Schneidkante
- 61: Spannut
- 62: Schaft
- 63: Arbeitsbereich
- 64: Spannutende
- 65: Impulsfolge
- 66: Einrichtung zur Strahlhomogenisierung
- 67: freies Ende v. 27
- 68: Ende v. 59
- 69: Beginn v. 59
- 70: Außenseite
- 71: Freistellungsvertiefung
- 72: Freifläche
- 73: Spanfläche

- 75: Spanleitstufe
- 76: Stützfase
- 77: Vertiefung

- α: Neigungswinkel

- A: Abstand
- B: Pulsbahn
- D: Durchmesser
- dS: Verschiebung
- E: Endpunkt
- f: Impulsfrequenz
- F: Ebene
- I: Intensität
- L: Längsachse v. 27
- P: Prozessgasstrom
- R: Abstrahlrichtung
- S: Startpunkt
- V: Relativbewegungsrichtung
- x: erste Richtung
- y: dritte Richtung
- z: zweite Richtung

## Patentansprüche

1. Verfahren zur Herstellung zumindest einer Spannut (61) und zumindest einer Scheidkante (60) an einem Rohling (27), mit den Schritten:
- Bereitstellen des Rohlings (27),
- Erzeugen von Laserstrahlimpulsen (24),
und **gekennzeichnet durch** die Schritte:
- Richten der Laserstrahlimpulse (24) mittels einer Ablenkeinrichtung (23) auf voneinander beabstandete vorgegebene Auftreffstellen (25) entlang einer vorgegebenen Pulsbahn (B) innerhalb einer vorgegebenen Pulsfläche (55) auf dem Rohling (27),
- Ausführen einer Relativbewegung (V) zwischen dem Rohling (27) und der Pulsfläche (55) mittels einer Positioniervorrichtung (30), um die zumindest eine Spannut (61) und die zumindest eine Schneidkante (60) am Rohling (27) zu erzeugen, wobei Material schichtweise in mehreren durch die Pulsfläche (55) bestimmten Abtragschichten (59) abgetragen wird,
- wobei zunächst die zumindest eine Spannut (61) in dem Rohling (27) erzeugt wird bevor die zumindest eine Schneidkante (60) an einer Außenseite (70) des Rohlings (27) erzeugt wird, und wobei eine Intensität der Laserstrahlimpulse (24) für das Erzeugen der zumindest einen Schneidkante (60) geringer ist als für das Erzeugen der zumindest einen Spannut (61).

2. Verfahren nach Anspruch 1,
**dadurch gekennzeichnet, dass** der Rohling (27) eine zylindrische Form aufweist und dass ein herzustellendes Werkzeug ein Rotationswerkzeug ist.

3. Verfahren nach Anspruch 1,
**dadurch gekennzeichnet, dass** nach dem Erzeugen der zumindest einen Spannut (61) und vor dem Erzeugen der zumindest einen Schneidkante (60) ein Freistellungsvertiefung (71) erzeugt wird, die sich an eine beim Erzeugen der Schneidkante (60) entstehende Freifläche (72) anschließt.

4. Verfahren nach Anspruch 1,
**dadurch gekennzeichnet, dass** die Größe der Pulsfläche (55) beim Erzeugen der zumindest einen Spannut (61) variiert.

5. Verfahren nach Anspruch 1,
**dadurch gekennzeichnet, dass** ein Werkzeug aus einem rotationssymmetrischen Rohling mit einem maximalen Durchmesser von kleiner als 2 Millimetern hergestellt wird.

6. Verfahren nach Anspruch 1,
**dadurch gekennzeichnet, dass** eine Formbearbeitung des Rohlings (27) zur Herstellung eines Werkzeugs ausschließlich durch die Laserstrahlimpulse (24) erfolgt.

7. Verfahren nach Anspruch 1,
**dadurch gekennzeichnet, dass** die Positioniereinrichtung (30) einen Neigungswinkel (a) zwischen der optischen Achse (R) eines die Laserstrahlimpulse (24) abstrahlenden Laserkopfes (19) und der zumindest einen am Rohling (27) herzustellenden Spannut (61) oder Schneidkante (60) einstellt.

8. Verfahren nach Anspruch 7,
**dadurch gekennzeichnet, dass** die Positioniereinrichtung (30) den Neigungswinkel (a) während der Bearbeitung des Rohlings (27) verändert.

9. Verfahren nach Anspruch 1,
**dadurch gekennzeichnet, dass** die Intensität (I) der Laserimpulse (24) während des Abtragens des Materials variiert.

10. Verfahren nach Anspruch 1,
**dadurch gekennzeichnet, dass** die Ablenkeinrichtung (23) die Laserstrahlimpulse (24) in einer vorgegebenen Reihenfolge auf die Auftreffstellen (25) der Pulsfläche (55) richtet.

11. Laserbearbeitungsvorrichtung zur Herstellung eines Werkzeugs aus einem Rohling (27),
mit einem Laser (21), der dazu eingerichtet ist Laserstrahlimpulse (24) zu erzeugen, **gekennzeichnet durch** einen eine Ablenkeinrichtung (23) aufweisenden Laserkopf (19), die dazu eingerichtet ist, die Laserstrahlimpulse (24) des Lasers (21) auf voneinander beabstandete vorgegebene Auftreffstellen (25) innerhalb einer vorgegebenen Pulsfläche (55) auf dem Rohling (27) zu richten, eine Positioniereinrichtung (30), die dazu eingerichtet ist, eine Relativbewegung zwischen dem Rohling (27) und der Pulsfläche (55) auszuführen, eine Steuereinrichtung (29), die dazu eingerichtet ist, die Positioniereinrichtung (30) anzusteuern und die dazu eingerichtet ist, den Laserkopf (19) anzusteuern, um Bearbeitungsparameter für die Bearbeitung des Rohlings (27) einzustellen oder zu verändern, wobei die Steuereinrichtung (29) dazu eingerichtet ist, die Laserbearbeitungseinrichtung zur Durchführung der folgenden Schritte anzusteuern:
Richten der Laserstrahlimpulse (24) mittels der Ablenkeinrichtung (23) auf voneinander beabstandete vorgegebene Auftreffstellen (25) entlang einer vorgegebenen Pulsbahn (B) innerhalb einer vorgegebenen Pulsfläche (55) auf dem Rohling (27),- Ausführen einer Relativbewegung (V) zwischen dem Rohling (27) und der Pulsfläche (55) mittels der Positioniervorrichtung (30), um zumindest eine Spannut (61) und zumindest eine Schneidkante (60) am Rohling (27) zu erzeugen, wobei Material schichtweise in mehreren durch die Pulsfläche (55) bestimmten Abtragschichten (59) abgetragen wird,- wobei zunächst die zumindest eine Spannut (61) in dem Rohling (27) erzeugt wird bevor die zumindest eine Schneidkante (60) an einer Außenseite (70) des Rohlings (27) erzeugt wird, und wobei eine Intensität der Laserstrahlimpulse (24) für das Erzeugen der zumindest einen Schneidkante (60) geringer ist als für das Erzeugen der zumindest einen Spannut (61).

12. Laserbearbeitungsvorrichtung nach Anspruch 11,
**dadurch gekennzeichnet, dass** die Positioniereinrichtung (30) eine Drehachse (39) aufweist, die mit der Längsachse (L) eines zu bearbeitenden zylindrischen Rohlings (27) übereinstimmt.

13. Laserbearbeitungsvorrichtung nach Anspruch 11,
**dadurch gekennzeichnet, dass** der Laserkopf (19) eine Einrichtung (66) zur Strahlhomogenisierung der Laserstrahlimpulse (24) aufweist.

14. Laserbearbeitungsvorrichtung nach Anspruch 11,
**dadurch gekennzeichnet, dass** eine Prozessgaszufuhr (45) vorhanden ist, die dazu eingerichtet ist, einen auf den Rohling (27) gerichteten Prozessgasstrom (P) zu erzeugen, der insbesondere schräg zur Pulsfläche (55) ausgerichtet ist.

15. Laserbearbeitungsvorrichtung nach Anspruch 14,
**dadurch gekennzeichnet, dass** die Prozessgaszufuhr (45) mehrere Prozessgasdüsen (52) aufweist, die dazu eingerichtet sind, jeweils einen Teilstrom des Prozessgasstroms (P) aus unterschiedlichen Richtungen auf den Bearbeitungsbereich in der Umgebung der Pulsfläche (55) zu richten.

## Claims

1. Method for producing at least one chip groove (61) and at least one cutting edge (60) on a blank (27), with the following steps:
- provision of the blank (27),
- generation of laser beam impulses (24),
and **characterised by** the steps:
- directing of the laser beam impulses (24) by means of a deflection device (23) onto predefined and mutually spaced impingement points (25) along a predefined pulse track (B) within a predefined pulse surface (55) on the blank (27),
- performance of a relative movement (V) between the blank (27) and the pulse surface (55) by means of a positioning device (30) in order to produce the at least one chip groove (60) and the at least one cutting edge (60) on the blank (27), wherein material is removed in layers in several removal layers (59) determined by the pulse surface (55),
- wherein firstly the at least one chip groove (61) is produced in the blank (27) before the at least one cutting edge (60) is produced on an outside (70) of the blank (27), and wherein an intensity of the laser beam impulses (24) for producing the at least one cutting edge (60) is lower than for producing the at least one chip groove (61).

2. Method according to claim 1, **characterised in that** the blank (27) has a cylindrical form and that a tool to be manufactured is a rotational tool.

3. Method according to claim 1, **characterised in that** after producing the at least one chip groove (61) and before producing the at least one cutting edge (60), a clearance depth (71) is produced which adjoins a free surface (72) occurring on production of the cutting edge (60).

4. Method according to claim 1, **characterised in that** the size of the pulse surface (55) varies on production of the at least one chip groove (61).

5. Method according to claim 1, **characterised in that** a tool is manufactured from a rotationally symmetrical blank with a maximum diameter of less than 2 mm.

6. Method according to claim 1, **characterised in that** for manufacture of a tool, the blank (27) is form-machined exclusively by the laser beam impulses (24).

7. Method according to claim 1, **characterised in that** the positioning device (30) sets an inclination angle (α) between the optical axis (R) of a laser head (19) emitting the laser beam impulses (24) and the at least one chip groove (61) or cutting edge (60) to be produced on the blank (27).

8. Method according to claim 7, **characterised in that** the positioning device (30) changes the inclination angle (α) during machining of the blank (27).

9. Method according to claim 1, **characterised in that** the intensity (I) of the laser impulses (24) varies during removal of the material.

10. Method according to claim 1, **characterised in that** the deflection device (23) directs the laser beam impulses (24) onto the impingement points (25) of the pulse surface (55) in a predefined order.

11. Laser machining device for manufacturing a tool from a blank (27), with a laser (21) which is configured to generate laser beam impulses (24),
**characterised by**
- a laser head (19) which has a deflection device (23) and is configured to direct the laser beam impulses (24) of the laser (21) onto predefined and mutually spaced impingement points (25) within a predefined pulse surface (55) on the blank (27),
- a positioning device (30) which is configured to perform a relative movement between the blank (27) and the pulse surface (55),
- a control device (29) which is configured to actuate the positioning device (30) and which is configured to actuate the laser head (19) in order to set or change machining parameters for machining of the blank (27),
wherein the control device (29) is configured to actuate the laser machining device to perform the following steps:
- directing of the laser beam impulses (24) by means of the deflection device (23) onto predefined and mutually spaced impingement points (25) along a predefined pulse track (B) within a predefined pulse surface (55) on the blank (27),
- performance of a relative movement (V) between the blank (27) and the pulse surface (55) by means of the positioning device (30) in order to produce at least one chip groove (61) and at least one cutting edge (60) on the blank (27), wherein material is removed in layers in several removal layers (59) determined by the pulse surface (55),
- wherein firstly the at least one chip groove (61) is produced in the blank (27) before the at least one cutting edge (60) is produced on an outside (70) of the blank (27), and wherein an intensity of the laser beam impulses (24) for producing the at least one cutting edge (60) is lower than for producing the at least one chip groove (61).

12. Laser machining device according to claim 11, **characterised in that** the positioning device (30) has a rotational axis (39) which coincides with the longitudinal axis (L) of a cylindrical blank (27) to be machined.

13. Laser machining device according to claim 11, **characterised in that** the laser head (19) has a device (66) for homogenising the beam of the laser beam impulses (24).

14. Laser machining device according to claim 11, **characterised in that** a process gas supply (45) is provided which is configured to produce a process gas stream (P) directed at the blank (27) and oriented in particular obliquely to the pulse surface (55).

15. Laser machining device according to claim 14, **characterised in that** the process gas supply (45) comprises several process gas nozzles (52) which are configured to each direct a part of the process gas stream (P) from different directions onto the machining region in the environment of the pulse surface (55).

## Revendications

1. Procédé de fabrication d'au moins une gorge de dégagement de copeaux (61) et d'au moins une arête de coupe (60) sur une ébauche (27), comportant les étapes suivantes :
- mise en place de l'ébauche (27),
- génération d'impulsions de faisceau laser (24),
et **caractérisé en ce qu'**il comprend les étapes suivantes :
- orientation des impulsions de faisceau laser (24), au moyen d'un dispositif de déviation (23), sur des points d'incidence (25) prédéterminés, espacés les uns des autres, le long d'une trajectoire d'impulsions (B) prédéterminée, à l'intérieur d'une surface d'impulsions (55) prédéterminée sur l'ébauche (27),
- exécution d'un mouvement relatif (V) entre l'ébauche (27) et la surface d'impulsions (55), au moyen d'un dispositif de positionnement (30), afin de réaliser la gorge de dégagement de copeaux (61), au nombre d'au moins une, et l'arête de coupe (60), au nombre d'au moins une, sur l'ébauche (27), la matière étant éliminée par couches, en plusieurs couches d'enlèvement (59) déterminées par la surface d'impulsions (55),
- sachant que l'on réalise d'abord la gorge de dégagement de copeaux (61), au nombre d'au moins une, dans l'ébauche (27), avant de réaliser l'arête de coupe (60), au nombre d'au moins une, sur une face extérieure (70) de l'ébauche (27), et sachant qu'une intensité des impulsions de faisceau laser (24) pour la réalisation de l'arête de coupe (60), au nombre d'au moins une, est plus faible que pour la réalisation de la gorge de dégagement de copeaux (61), au nombre d'au moins une.

2. Procédé selon la revendication 1, **caractérisé en ce que** l'ébauche (27) présente une forme cylindrique et **en ce qu'**un outil devant être fabriqué est un outil rotatif.

3. Procédé selon la revendication 1, **caractérisé en ce que**, après la réalisation de la gorge de dégagement de copeaux (61), au nombre d'au moins une, et avant la réalisation de l'arête de coupe (60), au nombre d'au moins une, on réalise un creux de dégagement (71) qui se raccorde à une face de dépouille (72) formée lors de la réalisation de l'arête de coupe (60).

4. Procédé selon la revendication 1, **caractérisé en ce que** la taille de la surface d'impulsions (55) varie lors de la réalisation de la gorge de dégagement de copeaux (61), au nombre d'au moins une.

5. Procédé selon la revendication 1, **caractérisé en ce qu'**un outil est réalisé à partir d'une ébauche à symétrie de révolution ayant un diamètre maximal qui est inférieur à 2 millimètres.

6. Procédé selon la revendication 1, **caractérisé en ce qu'**une mise en forme de l'ébauche (27), en vue de la fabrication d'un outil, est effectuée exclusivement par les impulsions de faisceau laser (24).

7. Procédé selon la revendication 1, **caractérisé en ce que** le dispositif de positionnement (30) règle un angle d'inclinaison (a) entre l'axe optique (R) d'une tête laser (19), émettant les impulsions de faisceau laser (24), et la gorge de dégagement de copeaux (61) ou l'arête de coupe (60), au nombre d'au moins une, devant être réalisée sur l'ébauche (27).

8. Procédé selon la revendication 7, **caractérisé en ce que** le dispositif de positionnement (30) modifie l'angle d'inclinaison (a) au cours de l'usinage de l'ébauche (27).

9. Procédé selon la revendication 1, **caractérisé en ce que** l'intensité (I) des impulsions laser (24) varie pendant l'enlèvement de la matière.

10. Procédé selon la revendication 1, **caractérisé en ce que** le dispositif de déviation (23) dirige les impulsions de faisceau laser (24) dans un ordre prédéterminé sur les points d'incidence (25) de la surface d'impulsions (55).

11. Dispositif d'usinage au laser pour la fabrication d'un outil à partir d'une ébauche (27), comprenant un laser (21) qui est conçu pour générer des impulsions de faisceau laser (24), **caractérisé par**
une tête laser (19) présentant un dispositif de déviation (23) qui est conçu pour orienter les impulsions de faisceau laser (24) du laser (21) sur des points d'incidence (25) prédéterminés, espacés les uns des autres à l'intérieur d'une surface d'impulsions (55) prédéterminée sur l'ébauche (27),
un dispositif de positionnement (30) qui est conçu pour exécuter un mouvement relatif entre l'ébauche (27) et la surface d'impulsions (55),
un dispositif de commande (29) qui est conçu pour activer le dispositif de positionnement (30) et qui est conçu pour activer la tête laser (19) afin de régler ou modifier des paramètres d'usinage pour l'usinage de l'ébauche (27), le dispositif de commande (29) étant conçu pour activer le dispositif d'usinage au laser en vue de l'exécution des étapes suivantes :
- orientation des impulsions de faisceau laser (24), au moyen du dispositif de déviation (23), sur des points d'incidence (25) prédéterminés, espacés les uns des autres, le long d'une trajectoire d'impulsions (B) prédéterminée, à l'intérieur d'une surface d'impulsions (55) prédéterminée sur l'ébauche (27),
- exécution d'un mouvement relatif (V) entre l'ébauche (27) et la surface d'impulsions (55), au moyen du dispositif de positionnement (30), afin de réaliser au moins une gorge de dégagement de copeaux (61) et au moins une arête de coupe (60) sur l'ébauche (27), la matière étant éliminée par couches, en plusieurs couches d'enlèvement (59) déterminées par la surface d'impulsions (55),
- sachant que l'on réalise d'abord la gorge de dégagement de copeaux (61), au nombre d'au moins une, dans l'ébauche (27), avant de réaliser l'arête de coupe (60), au nombre d'au moins une, sur une face extérieure (70) de l'ébauche (27), et sachant qu'une intensité des impulsions de faisceau laser (24) pour la réalisation de l'arête de coupe (60), au nombre d'au moins une, est plus faible que pour la réalisation de la gorge de dégagement de copeaux (61), au nombre d'au moins une.

12. Dispositif d'usinage au laser selon la revendication 11, **caractérisé en ce que** le dispositif de positionnement (30) présente un axe de rotation (39) qui coïncide avec l'axe longitudinal (L) d'une ébauche (27) cylindrique devant être usinée.

13. Dispositif d'usinage au laser selon la revendication 11, **caractérisé en ce que** la tête laser (19) présente un dispositif (66) destiné à l'homogénéisation de faisceau des impulsions de faisceau laser (24).

14. Dispositif d'usinage au laser selon la revendication 11, **caractérisé en ce qu'**il est prévu une arrivée de gaz de procédé (45) qui est conçue pour générer un flux de gaz de procédé (P) qui est dirigé sur l'ébauche (27) et est notamment orienté en biais par rapport à la surface d'impulsions (55).

15. Dispositif d'usinage au laser selon la revendication 14, **caractérisé en ce que** l'arrivée de gaz de procédé (45) présente plusieurs buses à gaz de procédé (52) qui sont conçues pour diriger respectivement un flux partiel du flux de gaz de procédé (P) depuis des directions différentes sur la zone d'usinage, dans le voisinage de la surface d'impulsions (55).
